# EUROPÄISCHE PATENTSCHRIFT

(11) **EP 0 924 447 B1**
(45) Veröffentlichungstag und Bekanntmachung des Hinweises auf die Patenterteilung: **14.06.2000**
(21) Anmeldenummer: 97122182.5
(22) Anmeldetag: 16.12.1997
(51) Int. Cl.: F16H 61/00

(54) **Pitot-Anordnung für ein stufenlos regelbares Keilscheibengetriebe**
Pitot arrangement for continuously variable V-belt transmission
Arrangement pitot pour transmission à variation de vitesse à courroie trapézoidale

(43) Veröffentlichungstag der Anmeldung: 23.06.1999
(73) Patentinhaber: Ford Global Technologies, Inc., Dearborn, Michigan 48126 (US)
(72) Erfinder: Wirtz, Hans-Peter, 50769 Köln (DE)
(74) Vertreter: Messulam, Alec Moses

(56) Entgegenhaltungen:
- EP-A- 0 489 999
- DE-C- 3 600 410
- US-A- 4 502 352

## Beschreibung

Die Erfindung bezieht sich auf eine Pitot-Anordnung für ein stufenlos regelbares Keilscheibengetriebe, der im Oberbegriff des Patentanspruches 1 erläuterten Art.

Aus der DE 36 00 410 C1 ist eine Pitot-Anordnung für hydraulisch gesteuerte Getriebe, insbesondere für Kraftfahrzeuge bekannt, bei der die übliche, einen nach innen offenen Ringkanal bildende, umlaufende Pitot-Kammer unmittelbar mit der Pumpenantriebswelle einer Druckmittelpumpe verbunden ist. In die Pitot-Kammer ragt ein Füllrohr und ein Pitot-Sensorrohr hinein, wobei das Füllrohr für die Aufrechterhaltung eines gleichbleibenden Flüssigkeitsstandes in der Pitot-Kammer sorgt und das Pitot-Sensorrohr zur Aufnahme der motorendrehzahlabhängigen Drucksignale vorgesehen ist.

Die bekannte Pitot-Anordnung weist den Nachteil auf, daß die Pumpenantriebswelle abgedichtet durch das Pumpengehäuse nach außen geführt werden muß, um hier die rotierend umlaufende Pitot-Kammer aufzunehmen. Damit wird die Pumpenantriebswelle, die zumeist auch unmittelbar die Eingangs-Antriebswelle eines Getriebes ist, in unerwünschter Weise lang, wodurch einerseits ihre Fertigung und andererseits auch ihre Montage schwieriger wird.

Die Aufgabe der Erfindung ist es, eine Pitot-Anordnung für ein stufenlos regelbares Keilscheibengetriebe der im Oberbegriff des Patentanspruches 1 erläuterten Art derart zu verbessern, daß nur mehr eine einfachere Pumpenantriebswelle erforderlich wird und der Montage- und Bauaufwand verringert wird.

Gemäß der Erfindung wird diese Aufgabe gelöst, indem bei einer Pitot-Anordnung für ein stufenlos regelbares Keilscheibengetriebe, der im Oberbegriff des Patentanspruches 1 erläuterten Art, die im Kennzeichenteil des Patentanspruches 1 aufgezeigten Merkmale angewendet werden.

Dadurch, daß die Pitot-Anordnung an der Achse des getriebenen Läufers der Druckmittelpumpe angeordnet wird, kann die erforderliche Anordnung der Pitot-Kammer an einer einfacher zu fertigenden kurzen Achse des getriebenen Läufers vorgenommen werden und kann hier einen geringeren Durchmesser aufweisen und somit platzsparender angeordnet werden.

Die Erfindung wird anhand eines in der beiliegenden Zeichnung gezeigten Ausführungsbeispieles näher erläutert. Es zeigt:
- Fig. 1: einen vertikalen Schnitt durch den Bereich einer Druckmittelpumpe eines stufenlos regelbaren Keilscheibengetriebes mit einer Pitot-Anordnung gemäß der Erfindung und
- Fig. 2: eine Schnitt ähnlich Fig. 1 durch eine übliche Pitot-Anordnung.

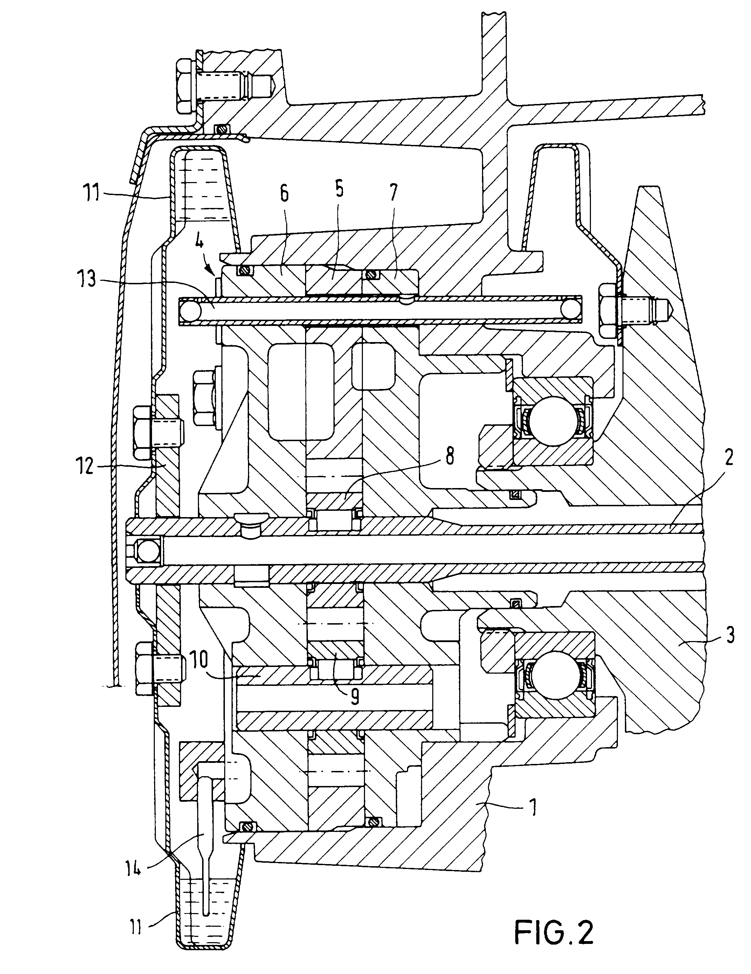

In Fig. 2 ist ein Gehäuse eines stufenlos regelbaren Keilscheibengetriebes mit 1 bezeichnet und eine Pumpenantriebswelle 2 erstreckt sich durch eine hohle Keilscheibenwelle 3 in ein Druckmittelpumpengehäuse 4, das im Getriebegehäuse 1 eingesetzt ist. Im Druckmittelpumpengehäuse 4 sind in einer Pumpenkammerplatte 5, die zwischen zwei Klemmscheiben 6 und 7 angeordnet ist, ein treibender Läufer 8 und ein getriebener Läufer 9 angeordnet. Der treibende Läufer 8 ist hierbei unmittelbar von der Pumpenantriebswelle 2 getrieben, während der getriebene Läufer 9 auf einer Achse 10 drehbar gelagert ist.

Bei der bekannten Pitot-Anordnung ist die einen nach innen offenen Ringkanal bildende Pitot-Kammer 11 unmittelbar treibend mit einem Flansch 12 an der verlängerten Pumpenantriebswelle verbunden. In den Bereich der Pitot-Kammer 11 ragt ein Füllrohr 13 und ein Pitot-Sensorrohr 14 ein.

Die große Länge der Pumpenantriebswelle 2 macht eine schwierige und aufwendige Herstellung erforderlich und die Montage ist entsprechend schwierig.

Wird die hydraulische Steuerung eines stufenlos regelbaren Keilscheibengetriebes zunehmend von Bauteilen einer elektronischen Steuerung übernommen, so wird eine Pitot-Anordnung, die unmittelbar ein analoges Drehzahlsignal liefert nur mehr für eine Notfunktion bei Ausfall der Elektronik benötigt. Eine solche Pitot-Anordnung kann dementsprechend einfacher und kleiner aufgebaut werden, wodurch ihr Bauaufwand und ihr Gewicht reduziert werden kann.

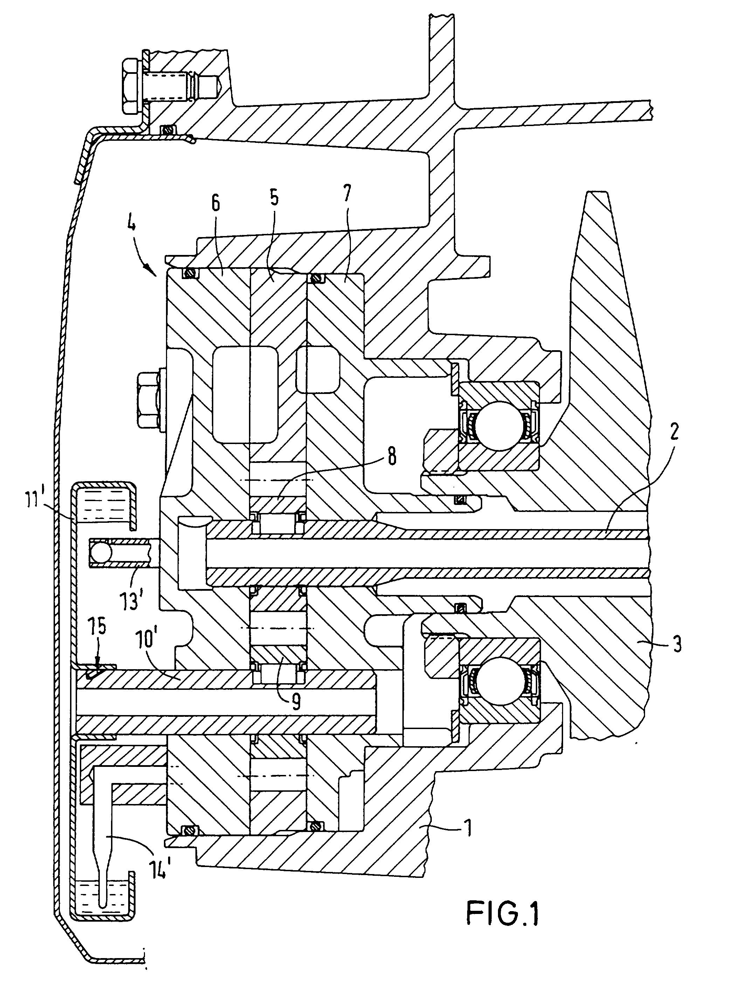

In Fig. 1 ist der Teil eines stufenlos regelbaren Keilscheibengetriebes gezeigt, in dem die Druckmittelpumpe angeordnet ist. Die mit der in Fig. 2 gezeigten herkömmlichen Bauform übereinstimmenden Bauteile sind mit den gleichen Bezugszeichen versehen.

Wie aus Fig. 1 ersichtlich, wird gemäß der Erfindung eine kleinere Pitot-Kammer 11' unmittelbar drehfest an der nach außerhalb des Pumpengehäuses geführten verlängerten Achse 10' des getriebenen Läufers 9 der Druckmittelpumpe 4 angeordnet.

Da die Pitot-Anordnung nur für eine Notfunktion vorgesehen ist, kann der Durchmesser der Pitot-Kammer 11' geringer sein und die entsprechende Anordnung eines Füllrohres 13' und eines Pitot-Sensorrohres 14' kann in einfacher Bauweise erfolgen.

So kann z.B. die Befestigung der ringförmigen Pitotkammer 11' an der Achse 10' des getriebenen Läufers 9' über eine einfache Schnapp-Klemmverbindung 15 erfolgen.

Dadurch kann bei einem in seinen wesentlichen Bauteilen vorgegebenen stufenlos regelbaren Keilscheibengetriebe eine sehr wünschenswerte Reduzierung des Bauaufwandes und des Gewichtes erreicht werden.

## Patentansprüche

1. Pitot-Anordnung für ein stufenlos regelbares Keilscheibengetriebe, mit einer Druckmittelpumpe (4) zur Bereitstellung des für die Verstellung der Kegelscheiben über Hydraulik-Servos benötigten Druckmittels, wobei der treibende Läufer (8) der Druckmittelpumpe (4) mit einem getriebenen Läufer (9) zusammenwirkt und an einem Läufer bzw. dessen Welle oder Achse eine Pitot-Anordnung angeordnet ist, die aus einer umlaufenden Pitot-Kammer (11'), einem Füllrohr und einem Pitot-Sensorrohr besteht,
**dadurch gekennzeichnet,** daß
- die Pitot-Anordnung, insbesondere die Pitot-Kammer (11'), an der verlängerten Achse (10') des getriebenen Läufers (9) der Druckmittelpumpe (4) angeordnet ist.

2. Pitot-Anordnung nach Anspruch 1,
**dadurch gekennzeichnet**, daß
- die Pitotkammer (11') an der Achse (10') des getriebenen Läufers (9) über eine Schnapp-Klemmverbindung (15) befestigt ist.

## Claims

1. A pitot arrangement for a continuously variable V-belt transmission having a pressure medium pump (4) to provide the pressure medium needed for the adjustment of its tapered pulleys by means of hydraulic servos, wherein the driving rotor (8) of the pressure medium pump (4) cooperates with a driven rotor (9) and a pitot arrangement comprising a circumferential pitot chamber (11'), a filler pipe and a pitot sensor tube is mounted on a rotor or on the shaft or axle thereof, characterised in that the pitot arrangement, in particular the pitot chamber (11'), is mounted on the extended axle (10') of the driven rotor (9) of the pressure medium pump (4).

2. A pitot arrangement according to claim 1, characterised in that the pitot chamber (1') is fixed on the axle (10') of the driven rotor (9) by means of a snap-action clamping joint.

## Revendications

1. Arrangement de Pitot pour une transmission réglable en continu à courroie trapézoïdale, avec une pompe de fluide hydraulique (4) pour fournir, par l'intermédiaire de dispositifs d'asservissement hydraulique, le fluide hydraulique nécessaire pour le déplacement des poulies coniques, le rotor menant (8) de la pompe de fluide hydraulique (4) coopérant avec un rotor mené (9) et un arrangement de Pitot étant disposé sur un rotor ou encore sur son arbre ou axe, arrangement qui est constitué d'une chambre de Pitot (11') entourante, d'un tube de remplissage et d'un tube capteur de Pitot, **caractérisé** en ce que l'arrangement de Pitot, notamment la chambre de Pitot (11'), est disposé sur l'axe prolongé (10') du rotor mené (9) de la pompe de fluide hydraulique (4).

2. Arrangement de Pitot selon la revendication 1, **caractérisé** en ce que la chambre de Pitot (11') est fixée sur l'axe (10') du rotor mené (9) au moyen d'un assemblage par serrage par enclenchement (15).
